# EUROPÄISCHE PATENTANMELDUNG

(11) **EP 1 070 635 A2**
(43) Veröffentlichungstag der Anmeldung: **24.01.2001**
(21) Anmeldenummer: 00112755.4
(22) Anmeldetag: 16.06.2000
(51) Int. Cl.: B60Q 1/48

(54) **Navigationsverfahren**

(30) Priorität: 17.07.1999 DE 19933666
(71) Anmelder: ROBERT BOSCH GMBH, 70442 Stuttgart (DE)
(72) Erfinder: Lau, Stefan, 31180 Giessen (DE); Schmidt, Heinrich, 31199 Diekholzen (DE); Hoffmann, Ralf, 31137 Hildesheim (DE)

(57) **Zusammenfassung**

Vorgeschlagen wird ein Navigationsverfahren zur Berechnung einer Fahrtroute von einem Start- oder aktuellen Fahrzeugstandort zu einem Zielort und zur Leitung eines Fahrzeugführers entlang der berechneten Fahrtroute, das sich dadurch auszeichnet, daß zu einem benutzerdefinierten Zielort mindestens eine Parkmöglichkeit vorgeschlagen und als präzisierter Zielort in die Routenberechnung einbezogen wird.

Das erfindungsgemäße Navigationsverfahren hat den Vorteil, daß nach Eingabe eines Navigationszielorts durch einen Fahrzeugführer auf Wunsch eine Fahrtroute vom Start- oder aktuellen Fahrzeugstandort zu einer am Navigationsziel befindlichen Parkmöglichkeit berechnet wird, wobei durch das Navigationsgerät automatisch die Menge der am Zielort befindlichen Parkmöglichkeiten automatisch bestimmt und zur automatischen oder benutzerdefinierten Auswahl bereitgestellt wird. Benutzerseitige Kenntnisse einer genauen Adresse einer Parkmöglichkeit sind somit nicht erforderlich, so daß der Fahrzeugführer von der Eingabe eines durch Straßennamen oder ähnliche Zusatzinformationen präzisierten Zielorts für die Routenberechnung entlastet wird.

## Beschreibung

### Stand der Technik

Die Erfindung geht von einem Navigationsverfahren zur Berechnung einer Fahrtroute von einem Start- oder aktuellen Fahrzeugstandort zu einem Zielort nach der Gattung des unabhängigen Patentanspruchs aus.

Bekannte autonome Fahrzeugnavigationsgeräte berechnen nach Eingabe eines Navigationsziels durch den Fahrzeugführer unter Rückgriff auf eine im Navigationsgerãt, beispielsweise auf CD-ROM, gespeicherte Kartendatenbasis eine Fahrtroute ausgehend von einem benutzerdefinierten Startort oder mittels einer dazu geeigneten fahrzeugseitigen Sensorik ermittelten aktuellen Fahrzeugstandort zu einem Navigationsziel.

Die Zieleingabe erfolgt in der Regel durch Angabe von Orts- oder Stadt- und Straßennamen. Liegen diese in Ballungsgebieten, wird der Fahrer nach Erreichen des Ziels oftmals keine Parkmöglichkeit finden und wird sich bei der Parkplatzsuche wieder vom Ziel entfernen. Für eine Routenberechnung zu einer bestimmten Parkgelegenheit in der Nähe des Ziels muß deren genaue Adresse bei Eingabe des Navigationszielorts exakt bekannt sein. Solche Details sind einem Fahrzeugführer bei einer Fahrt in eine fremde Stadt jedoch in der Regel nicht bekannt.

### Vorteile der Erfindung

Das erfindungsgemäße Navigationsverfahren mit den Merkmalen des unabhängigen Patentanspruchs hat demgegenüber den Vorteil, daß nach Eingabe eines Navigationszielorts durch einen Fahrzeugführer auf Wunsch eine Fahrtroute vom Start- oder aktuellen Fahrzeugstandort zu einer am Navigationsziel befindlichen Parkmöglichkeit berechnet wird, wobei durch das Navigationsgerät automatisch die Menge der am Zielort befindlichen Parkmöglichkeiten automatisch bestimmt und zur automatischen oder benutzerdefinierten Auswahl bereitgestellt wird. Benutzerseitige Kenntnisse einer genauen Adresse einer Parkmöglichkeit sind somit nicht erforderlich, so daß der Fahrzeugführer von der Eingabe eines durch Straßennamen oder ähnliche Zusatzinformationen präzisierten Zielorts für die Routenberechnung entlastet wird.

Vorteilhafterweise erfolgt dabei die Routenberechnung zu einer unter Berücksichtigung eines wählbaren oder vorgegebenen Optimierungskriteriums am Navigationsziel befindlichen Parkmöglichkeit ohne weiteres Zutun des Benutzers.

Ebenfalls von Vorteil ist es, wenn nach Eingabe des Zielorts eine Liste mit einer Auswahl von am Zielort befindlichen Parkmöglichkeiten, die einer bestimmten Vorgabe genügen, zur Auswahl einer Parkmöglichkeit angeboten wird. Von besonderem Vorteil ist es dabei, wenn diese Liste nach einem vorgebbaren oder vorgegebenen Optimierungskriterium sortiert ist. Dies ermöglicht dem Fahrzeugführer eine besonders schnelle und zielsichere Auswahl einer geeigneten Parkmöglichkeit.

Weiter von Vorteil ist es, wenn die Liste der ausgewählten Parkmöglichkeiten kurz vor Erreichen des Zielorts angeboten wird, da so der Fahrzeugführer noch kurzfristig über die Wahl einer bevorzugten Parkmöglichkeit entscheiden kann.

Weiter ist es von Vorteil, dem fahrzeugfesten Navigationsgerät die Anzahl der an allen oder zumindest der oder den interessierenden Parkmöglichkeiten verfügbaren freien Stellplätze mitzuteilen, so daß eine Auswahl einer geeigneten Parkmöglichkeit auch anhand dieses Kriteriums erfolgen kann. Das zeitaufwendige Anfahren mehrerer, unter Umständen vollständig belegter Parkmöglichkeiten, kann damit entfallen.

Weiter ist es von Vorteil, daß dann, wenn der Fahrzeugführer aus bestimmten Gründen eine bestimmte Parkgelegenheit nicht nutzen möchte, entweder automatisch, vorzugsweise unter Berücksichtigung eines oder mehrerer Optimierungskriterien, eine Route zu einer alternativen Parkmöglichkeit berechnet wird, oder aber eine Liste alternativer Parkmöglichkeiten zur Auswahl zur Verfügung gestellt wird, wobei diese Liste vorzugsweise wiederum nach einem Optimierungskriterium sortiert ist.

Schließlich ist es von Vorteil, wenn nach Auswahl einer Parkmöglichkeit entweder automatisch durch das fahrzeugseitige Navigationsgerät oder durch den Fahrzeugführer, über die Schnittstelle des Navigationsgeräts vor Erreichen der Parkmöglichkeit ein Stellplatz innerhalb der gewählten Parkmöglichkeit reserviert werden kann. Dies bietet ohne weiteres ersichtlich Vorteile für den Fahrzeugführer.

Von besonderem Vorteil ist es dabei, wenn zusätzlich zu dem Reservierungswunsch auch eine Fahrzeugkennung, insbesondere dessen amtliches Kennzeichen, an den Betreiber der Parkmöglichkeit gesandt wird, da damit eine Zuordnung einzelner Stellplätze zu einem reservierenden Fahrzeug möglich wird.

Weiter von Vorteil ist die zusätzliche Übertragung der voraussichtlichen Ankunftszeit des Fahrzeugs an der Parkmöglichkeit an deren Betreiber, da dieser durch entsprechende Reservierungshinweise zu verschiedenen Stellplätzen eine höhere Auslastung seiner Parkmöglichkeit erreichen kann.

### Zeichnungen

Ausführungsbeispiele der Erfindung sind in den Zeichnungen dargestellt und werden nachfolgend näher erläutert.

Es zeigen
Figur 1 ein Blockschaltbild des erfindungswesentlichen Teils eines Ausführungsbeispiels eines Navigationsgeräts zur Durchführung des erfindungsgemäßen Verfahrens,
Figur 2A einen Ablaufplan eines ersten Ausführungsbeispiel des erfindungsgemäßen Verfahrens,
Figur 2B einen Ablaufplan des Zielführungsvorgangs von einem Start- oder aktuellen Standort zu einer ausgewählten Parkmöglichkeit als Navigationsziel,
Figur 3A einen Ablaufplan eines zweiten Ausführungsbeispiels des erfindungsgemäßen Verfahrens und
Figur 3B einen Ablaufplan des Zielführungsvorgangs von einem Start- oder aktuellen Standort zum ausgewählten Zielort.

### Beschreibung der Ausführungsbeispiele

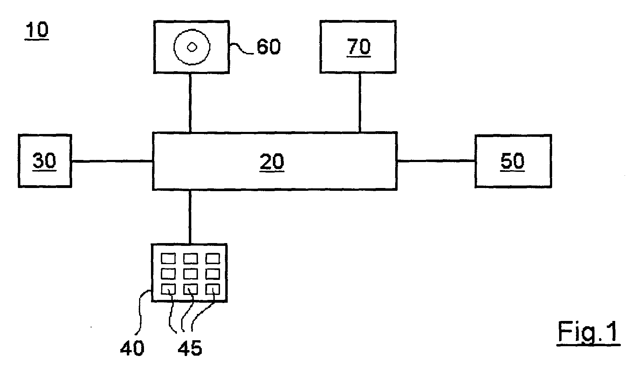

Das in Figur 1 dargestellte Fahrzeugnavigationssystem 10 umfaßt als zentralen Bestandteil eine Steuerung 20, die zum einen den eigentlichen Navigationsrechner zur Berechnung einer Fahrtroute umfaßt, zum anderen der Steuerung der verschiedenen Funktionen und Abläufe des Geräts dient. Die Steuerung 20 ist in vorteilhafter Weise in Form eines Betriebsprogramms, das durch einen Prozessor abgearbeitet wird, realisiert.

An die Steuerung 20 sind Mittel 30 zur Bestimmung eines Bewegungszustands des Fahrzeugs, in den das Navigationsgerät betrieben wird und einer aktuellen Fahrzeugposition angeschlossen. Bei diesen handelt es sich beispielsweise um einen Geschwindigkeitsmesser, einen Wegstreckenmesser, einen Kompaß auf Basis eines Drehratensensors und einen Satellitenempfänger zum Empfang von von Satelliten des Global Positioning System (GPS) zur Positionsbestimmung ausgestrahlten Funksignalen.

Weiter ist an die Steuerung 20 eine Eingabeeinheit 40 mit Bedienelementen 45, die beispielsweise in Form von Drucktasten ausgeführt sind, zur Eingabe eines Navigationsziels und zur Bedienung weiterer Funktionen des Geräts angeschlossen.

Zur Berechnung einer Fahrtroute von einem Startort oder aktuellen Fahrzeugstandort zu einem mittels der Eingabeeinheit 40 eingegebenen Zielort greift die Steuerung auf einen Speicher 60 zu, in dem eine Karte mit Verkehrswegeinformationen und Zusatzinformationen, insbesondere über Parkmöglichkeiten, abgespeichert sind. Der Speicher 60 ist beispielsweise in Form eines CD-ROM-Laufwerks ausgelegt, wobei die Kartendaten auf einer in das CD-ROM-Laufwerk eingelegten CD-ROM gespeichert sind. Alternativ kann der Speicher auch bei einem Diensteanbieter vorgesehen sein, und der Zugriff des Navigationsgeräts auf die im Speicher hinterlegten Daten, oder auch die Berechnung der Fahrtroute erfolgt im Dialog zwischen Fahrzeugnavigationsgerät und Diensteanbieter, über eine Kommunikationsverbindung, beispielsweise eine GSM-Mobiltelefonverbindung.

Zur Führung eines Fahrzeugführers entlang einer berechneten Fahrtroute verfügt das Navigationsgerät 10 über eine mit der Steuerung 20 verbundene Ausgabeeinheit 50, über die während des eigentlichen Zielführungsvorgangs Fahrtanweisungen in optischer und/oder akustischer Form ausgegeben werden. Weiter ist die Ausgabeeinheit zur Ausgabe einer Auswahl von durch den Navigationsrechners zu einem Zielort ausgewählten Parkmöglichkeiten ausgelegt.

Bei einer besonders vorteilhaften Ausführungsform eines erfindungsgemäßen Navigationsgeräts verfügt dieses schließlich über eine mit der Steuerung 20 verbundene Schnittstelle 70, die beispielsweise in Form eines Funk-, insbesondere eines Rundfunkempfängers ausgeführt ist, und über die Informationen, wie beispielsweise über die Belegung von Parkmöglichkeiten im Bereich des Navigationszielorts, an das Navigationsgerät 10 übertragbar sind. Im Falle eines Rundfunkempfängers sind diese Informationen beispielsweise im Rahmen des Radio Daten Systems (RDS) beispielsweise über einen TMC- (traffic message channel) Kanal übertragbar.

Bei einer weiteren vorteilhaften Ausführungsform eines erfindungsgemäßen Navigationsgeräts ist die erwähnte Schnittstelle 70 zum bidirektionalen Informationsaustausch, insbesondere neben dem Empfang von Informationen über die Belegung von Parkmöglichkeiten im Bereich des Navigationsziels zur Aussendung von Reservierungswünschen für einen Stellplatz innerhalb einer gewählten Parkmöglichkeit, beispielsweise in Form eines GSM- (Global System for Mobile Communication) Mobiltelefons, ausgelegt. Der Informationsaustausch zwischen Navigationsgerät und beispielsweise einer Parkmöglichkeitsverwaltung kann dabei beispielsweise in Form von sogenannten SMS (Short Message Service), je nach benötigter Übertragungskapazität aber auch über den Sprachkanal des Mobiltelefons erfolgen.

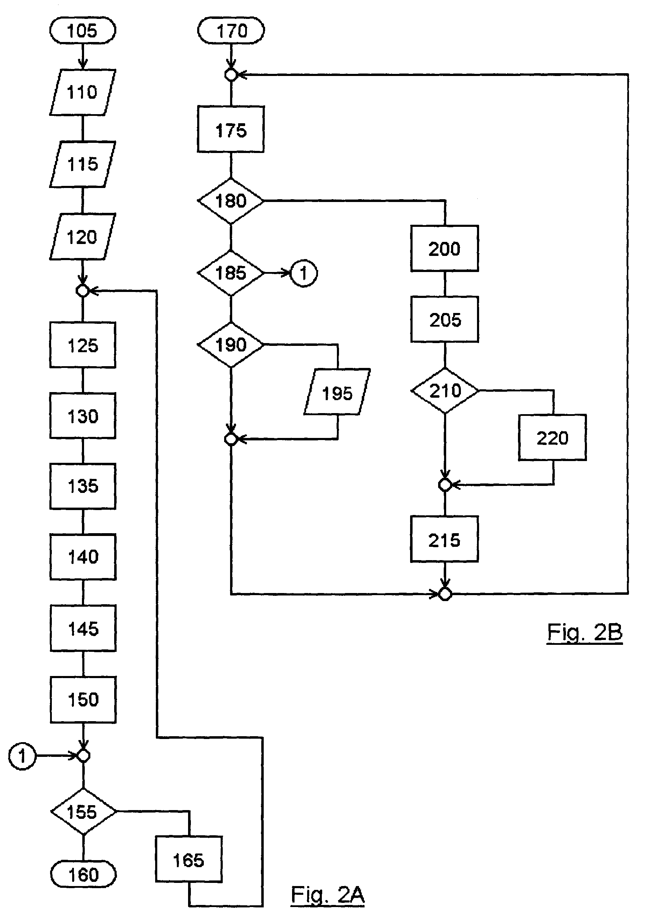

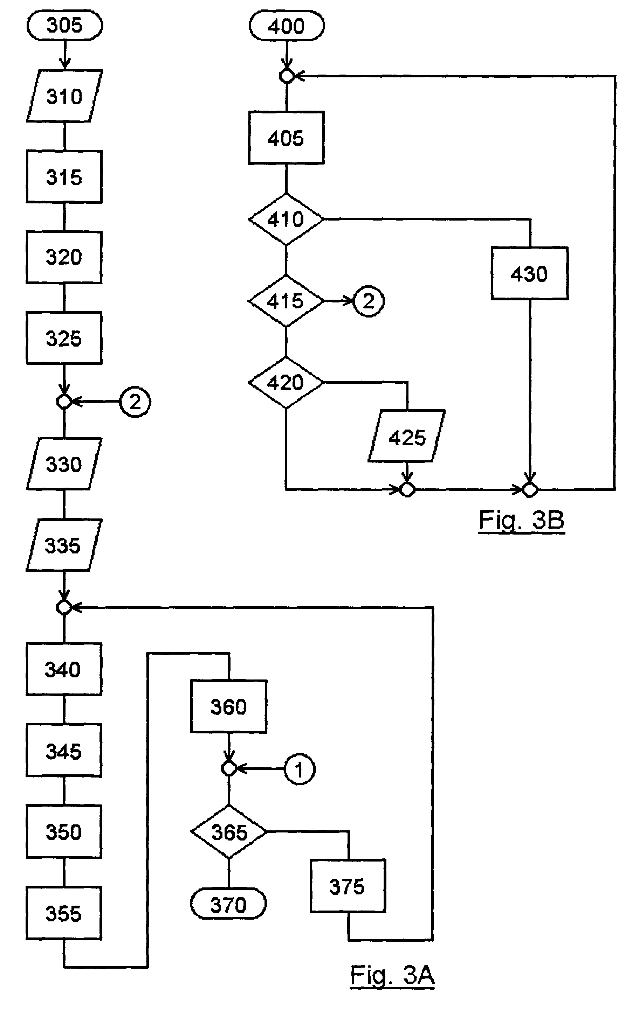

Hinsichtlich der Funktionsweise des erfindungsgemäßen Navigationsverfahrens wird im wesentlichen zwischen zwei, nachfolgend anhand der Figuren 2A, 2B, 3A und 3B erläuterten Ausführungsbeispielen unterschieden. Beim ersten Ausführungsbeispiel ist vorgesehen, daß eine Fahrtroute vom Start- oder aktuellen Standort nicht nur zum Fahrtziel, sondern bis zu einer bestimmten Parkmöglichkeit am Zielort berechnet wird. Damit ist eine Optimierung der Gesamtfahrtroute zur angestrebten Parkmöglichkeit, also beispielsweise einem bestimmten Parkhaus innerhalb des Zielorts, beispielsweise unter der Randbedingung einer räumlich oder zeitlich kürzest möglichen Fahrtroute, möglich. Beim zweiten Ausführungsbeispiel ist demgegenüber vorgesehen, daß im Sinne eines zweistufigen Verfahrens zunächst eine Fahrtroute vom aktuellen Standort zum Zielort bestimmt wird, und erst nach Eintreffen des Fahrzeugs am oder kurz vor dem Zielort eine geeignete Parkmöglichkeit ausgewählt und eine Route vom dann aktuellen Fahrzeugstandort zu der ausgewählten Parkmöglichkeit berechnet wird. Dies ermöglicht in vorteilhafter Weise beispielsweise die Berücksichtigung kurzfristiger Änderungen, beispielsweise einer Belegung eines Parkhauses, bei der Auswahl einer Parkmöglichkeit und der dementsprechenden Fahrtroutenberechnung.

Das erste Ausführungsbeispiel des erfindungsgemäßen Navigationsverfahrens wird nachfolgend anhand der Ablaufpläne der Figuren 2A und 2B erläutert.

Nach Inbetriebnahme des Navigationsgeräts 10 (Schritt 105) wird der Fahrzeugführer zur Eingabe eines Zielorts aufgefordert und der benutzerdefinierte Zielort über die Bedieneinheit 40, beispielsweise durch buchstabenweise Eingabe des Orts- oder Städtenamens und/oder durch Auswahl des Orts- oder Städtenamens aus einer Liste, eingegeben (Schritt 110). Anschleißend werden Informationen über die am Zielort verfügbaren Parkmöglichkeiten aus dem Speicher 60 des Navigationsgeräts 10 ausgelesen (Schritt 115). Weiter können optional Optimierungs- und/oder Auswahlkriterien zur Auswahl einer am Zielort anzusteuernden Parkmöglichkeit durch den Fahrzeugführer vorgegeben werden (Schritt 120). Solche Kriterien können Optimierungskriterien, wie beispielsweise
- kürzeste zeitliche oder räumliche Entfernung der Parkmöglichkeit zum aktuellen Fahrzeugstandort, wobei die kürzeste Entfernung als kürzeste tatsächlich zurückzulegende Entfernung aufgrund der zugrundeliegenden Kartendatenbasis bestimmt wird,
- kürzeste Entfernung der Parkmöglichkeit zu einem interessierenden Punkt am Navigationszielort,
- geringstmögliche Parkgebühr,
   oder sonstige Auswahlkriterien, wie beispielsweise
- überdachter Parkplatz, Parkhaus oder Tiefgarage,
- Mindestzahl an verfügbaren Stellplätzen sein. Standardmäßig ist vorzugsweise das in obiger Aufzählung erstgenannte Optimierungskriterium vorgegeben, das heißt, ohne Eingabe eines Auswahlkriteriums durch den Fahrzeugführer wird im weiteren Verlauf diejenige Parkmöglichkeit als Navigationsziel bestimmt, die zeitlich oder räumlich dem aktuellen Fahrzeugstandort am nächsten liegt.

Sofern vom Fahrzeugführer ein ohne vorherige Routenberechnung überprüfbares Auswahlkriterium für eine bestimmte Parkmöglichkeit vorgegeben wurde (Schritt 120), beispielsweise nur überdachte Stellplätze, Parkhaus oder Tiefgarage, kann bereits zu diesem Zeitpunkt die Anzahl der für die nachfolgende Routenberechnung als mögliches Navigationsziel angenommenen Parkmöglichkeiten auf diejenigen Parkmöglichkeiten beschränkt werden, auf die das Auswahlkriterium zutrifft.

Darauf wird der aktuelle Fahrzeugstandort als Startort für eine Fahrtroutenberechnung aus den Informationen der Positionsbestimmungsmittel 30, also beispielsweise aus den Signalen des Satellitenempfängers oder gespeicherten Positionsdaten einer vorangegangenen Fahrt, gegebenenfalls unter Berücksichtigung von Signalen des Geschwindigkeits/und Wegstreckenmessers und des Drehratensensors, bestimmt (Schritt 125). Ausgehend von dem als Startort ermittelten aktuellen Fahrzeugstandort werden unter Berücksichtigung der im Speicher 60 abgelegten Kartendaten, insbesondere der Verkehrswegeinformationen, Fahrtrouten zu den in Frage kommenden Parkmöglichkeiten am Zielort berechnet (130). Aufgrund der berechneten Fahrtrouten vom aktuellen Fahrzeugstandort zu sämtlichen in Betracht gezogenen Parkmöglichkeiten wird eine Liste von Fahrtrouten, vorzugsweise nach einem benutzerdefinierten oder vorgegebenen Optimierungskriterium, wie beispielsweise der kürzesten Fahrtstrecke vom aktuellen Fahrzeugstandort zur Parkmöglichkeit, sortiert, erstellt (135). Aus dieser Liste wird eine Parkmöglichkeit als die tatsächlich anzusteuernde Parkmöglichkeit entweder automatisch durch das Navigationsgerät, oder aber durch den Benutzer ausgewählt (140). Im ersten Fall wird diejenige Parkmöglichkeit ausgewählt, die dem Optimierungskriterium am besten genügt, also vorzugsweise die erste Parkmöglichkeit der Liste von Parkmöglichkeiten. Im zweiten Fall wird die Liste der Parkmöglichkeiten auf der Anzeigeeinheit 50 des Navigationsgeräts, vorzugsweise ergänzt durch zusätzliche Informationen, beispielsweise mit einer Kartendarstellung, auf der die Parkmöglichkeiten verzeichnet sind, dargestellt, so daß der Fahrzeugführer aufgrund persönlicher Präferenzen eine qualifizierte Auswahl treffen kann. Anschließend wird durch das Navigationsgerät diejenige Fahrtroute für einen nachfolgenden Zielführungsvorgang ausgewählt, die der ausgewählten Parkmöglichkeit aufgrund der vorangegangenen Fahrtroutenberechnung zugeordnet ist (145). Darauf erfolgt der eigentliche, nachfolgend anhand des Ablaufplans der Figur 2B erläuterte Zielführungsvorgang, das heißt die Führung des Fahrzeugführers entlang der berechneten Fahrtroute vom aktuellen Standort zur ausgewählten Parkmöglichkeit am Zielort (150).

Ist der Fahrzeugführer mit seinem Fahrzeug im Zuge des Zielführungsvorgangs bei der ausgewählten Parkmöglichkeit angelangt, hat dieser die Möglichkeit, entweder das Fahrzeug an dieser Parkmöglichkeit abzustellen, oder aber die Parkmöglichkeit zu verwerfen, weil beispielsweise keine freien Stellplatze verfügbar sind. In Schritt 155 wird demnach überprüft, ob der Fahrzeugführer die ausgewählte Parkmöglichkeit akzeptiert oder verwirft. Im ersten Fall, wenn also das Fahrzeug an der ausgewählten Parkmöglichkeit abgestellt wird, endet das Navigationsverfahren (160). Andernfalls, wenn also die ausgewählte Parkmöglichkeit verworfen wird, wird diese in der Liste der Parkmöglichkeiten gestrichen oder in der Rangfolge zurück-, vorzugsweise auf die letzte Stelle, gesetzt (165). Anschließend wird der Ablauf mit einer erneuten Standortbestimmung (125) und einer erneuten Fahrtroutenberechnung vom jetzt aktuellen Fahrzeugstandort zu den zum angefahrenen Zielort ermittelten Parkmöglichkeiten (130), sowie den weiteren folgenden, oben beschriebenen Schritten fortgesetzt.

Nachfolgend wird der erwähnte Zielführungsvorgang vom aktuellen Fahrzeugstandort zur ausgewählten Parkmöglichkeit am Zielort (Schritt 150) anhand des Ablaufplans der Figur 2B näher erläutert.

Der eigentliche Zielführungsvorgang beginnt in der Regel mit Inbewegungsetzen des Kraftfahrzeugs, also mit Antritt der Fahrt (170). Nach einer Bestimmung der aktuellen Fahrzeugposition (175 analog Schritt 125) wird überprüft, ob sich die aktuelle Fahrzeugposition auf der berechneten Fahrtroute vom der Routenberechnung zugrunde gelegten Startzur ausgewählten Parkmöglichkeit befindet (180). Ist dies der Fall, so wird nachfolgend überprüft, ob das Fahrzeug bereits an der ausgewählten Parkmöglichkeit angelangt ist (185). Ist dies der Fall, so ist der Zielführungsvorgang und mithin Schritt 150 beendet, und der Ablauf wird mit Schritt 155 (Figur 2A) fortgesetzt. Andernfalls erfolgt eine Prüfung anhand eines Vergleichs der aktuellen Fahrzeugposition mit der berechneten Fahrtroute dahingehend, ob ein Entscheidungspunkt, beispielsweise ein Abbiegepunkt an einer Kreuzung, also ein Punkt, an dem eine Fahranweisung an der Fahrzeugführer zu dessen Führung auszugeben ist, erreicht ist (190). Ist dies der Fall, so wird eine Fahrtanweisung, vorzugsweise in akustischer Form, beispielsweise mit dem Inhalt 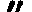 An der nächsten Kreuzung rechts abbiegen!", über die Ausgabeeinheit 50 des Navigationsgerät ausgegeben (195). Alternativ oder ergänzend kann auch eine Fahrtanweisung optisch, beispielsweise in Form eines Richtungspfeils und einer Restentfernungsanzeige bis zum Abbiegevorgang ausgegeben werden. Andernfalls, wenn also kein Entscheidungspunkt erreicht wurde, wird der Ablauf mit Schritt 175, also einer erneuten Positionsbestimmung fortgesetzt.

Wird in Schritt 180 entgegen der bisherigen Annahme festgestellt, daß sich der aktuelle Fahrzeugstandort nicht auf der berechneten Fahrtroute vom Startort zur Parkmöglichkeit am Zielort befindet, wird eine erneute Fahrtroutenberechnung vom aktuellen Fahrzeugstandort als Startort zu sämtlichen in Frage kommenden Parkmöglichkeiten am Zielort angestoßen (200). Darauf wird eine neue Liste von Parkmöglichkeiten, vorzugsweise unter Berücksichtigung des oder der durch den Benutzer oder alternativ des standardmäßig vorgegebenen Auswahl- oder Optimierungskriteriums/en, angelegt (205). Weicht diese Liste von der ursprünglich angelegten Liste, insbesondere hinsichtlich der Priorisierung einer bevorzugten Parkmöglichkeit, ab, ist also beispielsweise vom jetzt aktuellen Fahrzeugstandort aus eine andere Parkmöglichkeit schneller oder auf einem kürzeren Wege erreichbar, als die ursprünglich ausgewählte Parkmöglichkeit, was in Schritt 210 überprüft wird, so wird erneut eine Parkmöglichkeit aus der jetzt neuen Liste als anzusteuernde Parkmöglichkeit ausgewählt (220). Anschließend wird die Fahrtroute zu der entweder neu gewählten, oder, bei nicht geänderter Liste ursprünglich gewählten, Parkmöglichkeit ausgewählt (215).

Anschließend wird der Zielführungsvorgang mit Schritt 175, also einer erneuten Standortbestimmung fortgesetzt.

Das zweite Ausführungsbeispiel des erfindungsgemäßen Navigationsverfahrens wird nachfolgend anhand der Figuren 3A, 3B und 2B beschrieben.

Nach Inbetriebnahme des Navigationsgeräts 10 (Schritt 305) wird der Fahrzeugführer zur Eingabe eines Zielorts für eine Routenberechnung aufgefordert, worauf der Benutzer, über die Bedieneinheit 40, beispielsweise durch buchstabenweise Eingabe eines Ortsnamens, einen Zielort eingibt (Schritt 310). Darauf ermittelt der Navigationsrechner des Navigationsgeräts aufgrund der Informationen der Positionsbestimmungsmittel 30 einen aktuellen Fahrzeugstandort (Schritt 315) und berechriet unter Rückgriff auf die im Speicher 60 abgelegten Kartendaten, insbesondere die darin enthaltenen Verkehrswegeinformationen, eine Fahrtroute vom aktuellen Fahrzeugstandort zum benutzerdefinierten Zielort (Schritt 320). Anschließend erfolgt die Führung des Fahrzeugführers vom aktuellen Fahrzeugstandort zum Zielort (Schritt 325), die nachfolgend anhand des Ablaufplans der Figur 3B näher erläutert wird.

Ist das Fahrzeug im Zuge des Zielführungsvorgangs (Schritt 325) am Zielort, vorzugsweise an dessen Stadtgrenze oder einem Punkt kurz vor der Stadtgrenze, angelangt, so werden aus dem Speicher 60 die am Zielort verfügbaren Parkmöglichkeiten ausgelesen (Schritt 330), worauf der Fahrzeugführer optional ein Optimierungs- oder Auswahlkriterium zur Auswahl einer bestimmten aus der Menge der verfügbaren Parkmöglichkeiten vorgeben kann (335). Gibt der Fahrzeugführer kein Auswahlkriterium vor, so wird als Auswahlkriterium vorzugsweise eine Voreinstellung, beispielsweise eine kürzestmögliche Fahrtstrecke zur Parkmöglichkeit, gewählt (Schritt 335). Sofern bereits zu diesem Zeitpunkt, also ohne vorangegangene Routenberechnung, alleine aufgrund der in der Kartenbasis enthaltenen Informationen die Übereinstimmung der verfügbaren Parkmöglichkeiten mit einem oder mehreren vorgegebenen Auswahlkriterien möglich ist, beispielsweise die Vorgabe eines überdachten Stellplatzes, eines Parkhauses oder einer Parkgarage, wird vorzugsweise die Menge der verfügbaren Parkmöglichkeiten auf die Parkmöglichkeiten beschränkt, die dem Auswahlkriterium genügen.

Anschließend wird der aktuelle Fahrzeugstandort aufgrund der Informationen der Positionsbestimmungsmittel 30 bestimmt (Schritt 340) und eine Berechnung der Fahrtrouten zu sämtlichen verfügbaren, oder sofern deren Menge bereits beschränkt wurde, der beschränkten Menge an Parkmöglichkeiten angestoßen (Schritt 345). Anschließend wird eine Liste der, gegebenenfalls reduzierten, Menge verfügbarer Parkmöglichkeiten, vorzugsweise nach einem vorgegebenen oder zusätzlichen Optimierungskriterium sortiert, erzeugt (Schritt 350). Aus dieser Menge wählt das Navigationsgerät automatisch unter Berücksichtigung des oder der Optimierungskriteriums/en eine priorisierte Parkmöglichkeit sowie die dazu berechnete Fahrtroute aus (Schritt 355). Alternativ kann auch die Liste der Parkmöglichkeiten zur Auswahl einer Parkmöglichkeit durch den Fahrzeugführer auf der Ausgabeeinheit 50 dargestellt werden, wobei für den Fall, daß der Fahrzeugführer selbst keine Auswahl trifft, beispielsweise der erste Listeneintrag als dem oder den Optimierungskriterien am nächsten kommend, als Voreinstellung automatisch ausgewählt wird. Anschließend erfolgt der anhand der Figur 2B bereits beschriebene Zielführungsvorgang vom aktuellen Fahrzeugstandort zu der ausgewählten Parkmöglichkeit (Schritt 360), nach dessen Abschluß der Ablauf mit Schritt 365 fortgesetzt wird. Dort wird wiederum überprüft, ob die erreichte Parkmöglichkeit genutzt oder verworfen wird, weil beispielsweise keine freien Stellplätze verfügbar sind. Im ersten Fall, wenn also das Fahrzeug an der angesteuerten Parkmöglichkeit abgestellt wird, endet das Navigationsverfahren (Schritt 370). Andernfalls, wenn also die Parkmöglichkeit verworfen wurde, wird diese aus der gegebenenfalls reduzierten Liste von Parkmöglichkeiten zum vorliegenden Zielort gestrichen oder in ihrer Priorität zurückgesetzt (Schritt 375) und der Ablauf mit Schritt 340, also einer erneuten Standortbestimmung fortgesetzt.

Nachfolgend wird der erwähnte Zielführungsvorgang vom Start- oder aktuellen Fahrzeugstandort zum gewählten Zielort (Schritt 325, Figur 3A) anhand des Ablaufplans der Figur 3B näher erläutert.

Dieser beginnt mit Inbewegungsetzen des Fahrzeugs, in dem das Navigationsgerät betrieben wird (Schritt 400). Nach einer Bestimmung des aktuellen Fahrzeugstandorts aus den Informationen der Positionsbestimmungsmittel 30 und vorzugsweise zusätzlichem Abgleich der so ermittelten Fahrzeugposition mit der Kartenbasis im Sinne einer Plausibilitätsprüfung, dies ist allgemein unter dem Begriff 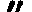 Map Matching" bekannt, (Schritt 405) wird festgestellt, ob der aktuelle Fahrzeugstandort auf der zuvor berechneten Fahrtroute vom Start- zum Zielort liegt (Schritt 410). Ist dies der Fall, so erfolgt eine Prüfung dahingehend, ob der vorgegebene Zielort, also vorzugsweise die Stadtgrenze des vorgegebenen Zielorts, erreicht ist (Schritt 415). Statt dessen kann auch vorgesehen sein, daß eine Annäherung bis zu einer vorgegebenen Entfernung bis zum Stadtzentrum oder bis zur Stadtgrenze oder ähnliches überprüft wird. Ist der Zielort im Sinne der vorstehende Definition, also beispielsweise die Stadtgrenze oder beispielsweise ein Punkt 10km von der Stadtgrenze entfernt erreicht, ist der eigentliche Zielführungsvorgang vom Start- zum Zielort abgeschlossen und es erfolgt nachfolgend die Bestimmung der Parkmöglichkeiten am Zielort (Schritt 330, Figur 3A), die Routenberechnung zu einer ausgewählten Parkmöglichkeit usw. Andernfalls, wenn also der Zielort noch nicht erreicht ist, wird überprüft, ob ein Entscheidungspunkt, also ein Punkt, an dem eine Fahranweisung an den Fahrzeugführer zu übermitteln ist, beispielsweise ein Abbiegepunkt, erreicht worden ist (Schritt 420). Ist ein Entscheidungspunkt erreicht, wird eine Fahranweisung zur Führung des Fahrzeugführers entlang der berechneten Fahrtroute, vorzugsweise in akustischer Form, optional ergänzt durch eine entsprechende optische Anzeige, über die Ausgabeeinheit 50 ausgegeben. Darauf, ebenso wie in dem Fall, daß kein Entscheidungspunkt erreicht worden ist, geht der Ablauf wieder zu Schritt 405 über, wo erneut der aktuelle, bei in Fahrt befindlichem Fahrzeug veränderte, Fahrzeugstandort bestimmt wird. Wird in Schritt 410 festgestellt, daß sich das Fahrzeug nicht auf der berechneten Fahrtroute befindet, ein Zustand, der beispielsweise durch ein Nichtbefolgen einer Fahranweisung eintreten kann, so erfolgt eine erneute Fahrtroutenberechnung vom jetzt aktuellen Fahrzeugstandort zum vorgegebenen Zielort unter Berücksichtigung der im Speicher 60 abgelegten Karteninformationen (Schritt 430), wobei die neu berechnete Fahrtroute dem weiteren Zielführungsvorgang zugrunde gelegt wird. Anschließend geht der Ablauf zu Schritt 405, also einer erneuten Standortbestimmung über. Hat der Fahrzeugführer nach Abweichen von der ursprünglichen Fahrtroute und einer entsprechenden Benachrichtigung durch das Navigationsgerät das Fahrzeug angehalten, um eine neue Routenberechnung abzuwarten, so wird in Schritt 410 die Übereinstimmung des aktuellen Standorts mit der neu berechneten Route festgestellt. Ist hingegen der Fahrzeugführer nach Abweichen von der Route weitergefahren, ist es möglich, daß nacheinander mehrfach Routen neu berechnet werden müssen, da der Fahrzeugführer unwissentlich wahrend der Weiterfahrt von einer neu berechneten Route abgewichen ist.

Ein drittes Ausführungsbeispiel der Erfindung, das sowohl in Verbindung mit dem ersten, als auch dem zweiten Ausführungsbeispiel durchführbar ist, sieht vor, daß dem Navigationsgerät Informationen über die Belegungszustände der am Zielort verfügbaren Parkmöglichkeiten mitgeteilt werden. Diese Mitteilung kann vorteilhafterweise über Rundfunk, beispielsweise einen im Rahmen des Radio Daten Systems (RDS) realisierten Traffic Message Channel (TMC), erfolgen. Das Radio Daten System sieht die Übertragung von Informationen über eine Rundfunksendefrequenz in Form digitaler Daten vor, die über einen außerhalb des hörbaren Bereichs liegenden modulierbaren Hilfsträger übertragen werden. Ein Teil dieser Daten ist der sogenannte Traffic Message Channel, der ursprünglich zur Übertragung von digital codierten Verkehrsinformationen vorgesehen ist.

Alternativ können Belegungszustände der Parkmöglichkeiten am Zielort auch über eine Mobiltelefonverbindung zwischen Fahrzeugnavigationsgerät und einem Diensteanbieter mitgeteilt werden.

Wird nun beispielsweise mittels eines zum Empfang dieser Daten geeigneten Funk-, insbesondere Rundfunk-, Empfängers die Information empfangen, daß eine bestimmte Parkmöglichkeit am Zielort vollständig belegt ist, also keine frein Stellplätze verfügbar sind, so kann dies durch das Navigationsverfahren derart berücksichtigt werden, daß die betroffene Parkmöglichkeit aus der Liste der am Zielort verfügbaren Parkmöglichkeiten gestrichen wird. Im Falle des ersten Ausführungsbeispiels hat dies, sofern die betroffene Parkmöglichkeit der ausgewählten Parkmöglichkeit entspricht, die Folge, daß eine neue Routenberechnung vom dann aktuellen Fahrzeugstandort zu den noch verfügbaren Parkmöglichkeiten, eine erneute Auswahl einer aus der Menge der verfügbaren Parkmöglichkeiten usw. angestoßen wird. Im Fall des zweiten Ausführungsbeispiels wird vorzugsweise ebenfalls die Liste der verfügbaren Parkmöglichkeiten entsprechend den Belegtmeldungen reduziert, wobei eine erneute Routenberechnung hier nur dann erforderlich ist, wenn sich der aktuelle Fahrzeugstandort zum Zeitpunkt der Meldung bereits innerhalb der Stadtgrenze des Zielorts oder einem vorgegebenen Umkreis um die Stadtgrenze oder das Stadtzentrum des Zielorts, je nach Ausführungsform, befindet.

Ein viertes Ausführungsbeispiel des erfindungsgemäßen Navigationsverfahrens, das in Verbindung mit den vorstehend beschriebenen ersten drei Ausführungsbeispielen des erfindungsgemäßen Verfahrens realisierbar ist, sieht vor, daß nach Auswahl einer bestimmten Parkmöglichkeit am Zielort über eine Funkverbindung eine Reservierung eines Stellplatzes innerhalb der ausgewählten Parkmöglichkeit vorgenommen wird. Dazu stellt das Navigationsgerät über das angeschlossene Mobiltelefon 70 eine Verbindung, beispielsweise zu einer städtischen Parkmöglichkeitsverwaltung, oder auch zu einem Parkhaus- oder Tiefgaragenbetreiber, her und sendet einen Reservierungswunsch für einen Fahrzeugstellplatz an oder in einer bestimmten Parkmöglichkeit. Vorteilhafterweise wird dazu auch mindestens ein das Fahrzeug kennzeichnendes Merkmal, vorzugsweise dessen amtliches Kennzeichen, an die Parkmöglichkeitsverwaltung übertragen. Diese reserviert darauf einen freien Stellplatz innerhalb der gewünschten Parkmöglichkeit, beispielsweise durch eine zumindest einem Teil der Stellplätze zugeordnete Anzeige, auf der das Kennzeichen des Fahrzeugs angezeigt ist. Im Falle des ersten Ausführungsbeispiels ist es sinnvoll, zusätzlich zu den genannten Informationen auch die voraussichtliche Ankunftszeit des Fahrzeugs bei der ausgewählten Parkmöglichkeit, die sich aus auf bestimmten Streckenabschnitten erzielbaren Fahrgeschwindigkeiten aufgrund der Karteninformationen vorherberechnen läßt, mitzuteilen, so daß ein Stellplatz erst ab dem voraussichtlichen Zeitpunkt des Eintreffens des Fahrzeugs an der Parkmöglichkeit reserviert werden muß.

Bei knappen freien Stellplätzen am Zielort ist es weiter sinnvoll, auch im Falle eines Abweichens von der berechneten Fahrtroute, die ausgewählte Parkmöglichkeit als Fahrtziel beizubehalten, oder eine Änderung der ausgewählten Parkmöglichkeit sowohl der ursprünglich ausgewählten, wie auch der neu ausgewählten Parkmöglichkeit schnellstmöglich mitzuteilen, um eine frühzeitige Umbuchung einer Stellplatzreservierung zu ermöglichen.

## Patentansprüche

1. Navigationsverfahren zur Berechnung einer Fahrtroute von einem Start- oder aktuellen Fahrzeugstandort zu einem Zielort und zur Leitung eines Fahrzeugführers entlang der berechneten Fahrtroute,
dadurch gekennzeichnet, daß zu einem benutzerdefinierten Zielort mindestens eine Parkmöglichkeit vorgeschlagen und als präzisierter Zielort in die Routenberechnung einbezogen wird.

2. Navigationsverfahren nach Anspruch 1, dadurch gekennzeichnet, daß aus einer Mehrzahl von Parkmöglichkeiten unter Verwendung eines Optimierungskriteriums eine Parkmöglichkeit als präzisierter Zielort ausgewählt wird.

3. Navigationsverfahren nach Anspruch 1, dadurch gekennzeichnet, daß aus einer Mehrzahl von Parkmöglichkeiten unter Verwendung eines Optimierungskriteriums eine Auswahl an Parkmöglichkeiten getroffen und zur Auswahl einer aus der Auswahl von Parkmöglichkeiten angeboten wird.

4. Navigationsverfahren nach Anspruch 2 oder 3, dadurch gekennzeichnet, daß das Optimierungskriterium mindestens eines der Kriterien
- kürzeste Entfernung zum aktuellen Fahrzeugstandort, wobei die kürzeste Entfernung als kürzeste tatsächlich zurückzulegende Entfernung aufgrund der zugrundeliegenden Kartendatenbasis bestimmt wird,
- kürzeste Entfernung zu einem interessierenden Punkt am Navigationszielort,
- geringstmögliche Parkgebühr,
- überdachter Parkplatz, Parkhaus oder Tiefgarage,
- Mindestzahl an verfügbaren Stellplätzen
ist.

5. Navigationsverfahren nach Anspruch 4, dadurch gekennzeichnet, daß die Anzahl an verfügbaren Stellplätzen aller oder mindestens der anhand des oder der Optimierungskriterien in Frage kommenden mindestens einen Parkmöglichkeit über eine Kommunikationsschnittstelle mitgeteilt und in die Routenberechnung einbezogen wird.

6. Navigationsverfahren nach einem der vorstehenden Ansprüche, dadurch gekennzeichnet, daß nach Auswahl einer Parkmöglichkeit über eine Kommunikationsschnittstelle ein Reservierungswunsch für einen Stellplatz innerhalb der ausgewählten Parkmöglichkeit an eine Parkmöglichkeitsbetreiber übertragen wird.

7. Navigationsverfahren nach Anspruch 6, dadurch gekennzeichnet, daß zusätzlich eine Fahrzeugkennung, insbesondere dessen amtliches Kennzeichen, an den Parkmöglichkeitsbetreiber übertragen wird.

8. Navigationsverfahren nach Anspruch 6 oder 7, dadurch gekennzeichnet, daß zusätzlich ein voraussichtlicher Zeitpunkt des Eintreffens des Fahrzeugs an der Parkmöglichkeit mitgeteilt wird.
